(19) Europäisches Patentamt
European Patent Office
Office européen des brevets

(11) Publication number: 0 115 126
A1

# (12) EUROPEAN PATENT APPLICATION

(21) Application number: 83307190.5

(22) Date of filing: 24.11.83

(51) Int. Cl.³: G 02 B 7/26

(30) Priority: 01.12.82 US 445984
07.03.83 US 472767

(43) Date of publication of application:
08.08.84 Bulletin 84/32

(84) Designated Contracting States:
CH DE FR GB IT LI NL SE

(71) Applicant: FREQUENCY CONTROL PRODUCTS, INC.
61-20 Woodside Avenue
Woodside New York 11377(US)

(72) Inventor: Brill, Henry L.
59-39 Parsons Boulevard
Flushing New York 11365(US)

(72) Inventor: Reich, Stanley
60 Orange Drive
Jericho New York 11753(US)

(74) Representative: Warden, John Christopher et al,
R.G.C. Jenkins & Co. 12-15, Fetter Lane
London EC4A 1PL(GB)

## (54) Switching means for single fiber optic cables.

(57) A switching device for optically transferring signals between single fiber optic cables Lu, Ld comprising:

A. a housing (17) with flat faces (17A), (17B) and a cavity (19), (20) therebetween, the faces having bores (18A), (18B) communicating with said cavity;

B. externally threaded bosses (22), (23) on said faces (17A), (17B), each having a tubular shank (21S), (22S), fitted into a respective bore (18A), 18B);

C. a plug P terminating each cable and comprising a hollow prong (23) receiving the cable, the core end (11) of the cable being fitted into a port at the tip (23T) of the prong, and a rotatable nut cap (24) threadably engaging the boss when the prong is projected into the shank, respective plugs for upstream and downstream cables being inserted into shanks on opposite sides of the housing; and

D. means in said cavity to effect a transfer of light from the port of the upstream plug into the port of the downstream plug.

EP 0 115 126 A1

./...

17
17B
24
23
25
19
18B
24
P
X
P
Lu
Ld
21
21S
22S
22
Fig. 3.
26
17A
20
17C
27
23
23T
11
P
Lu
Fig. 3A.
Fig. 5.
6
25
33
35
20
36
38
40
37
39
6
S
41
N

SWITCHING MEANS FOR SINGLE FIBER OPTIC CABLES

This invention relates generally to the transmission of light signals over optical fiber cables, and more particularly to an optical cross transfer switching unit for single fiber optic cables to effect a switching action without significant light energy losses.

Many advantages are gained by transmitting signals over fiber optic cables rather than electrical lines. In fiber optic transmission, the signals are conveyed in the form of light energy packets or photons that carry no electrical charge and are therefore unaffected by electric fields resulting from lightning and other sources, or by magnetic fields such as those generated by transformers and electrical machinery. Moreover, jacketed fiber optic lines can tolerate much more mechanical abuse than electrical cables of comparable size and possess a far greater information capacity.

Where the objective is to transmit and distribute light over distances not exceeding a few meters, use may be made of fiber optic bundles. Such bundles are useful for illumination, control purposes and image translation. But because fiber optic bundles are characterized by high attenuation losses, they are not suitable for data transmission over long distances.

The concern of the present invention is with cladded single fiber optic cables in which attenuation is so low that the cables are suitable for long distance data transmission. A cladded fiber optic cable is constituted by a single transparent core surrounded by one or more claddings which ensure total internal reflection. Though the single core transmits data in the form of photon packets and though the power carried thereby is extremely small, the frequency bandwidth is in the order of many megahertz, so that fiber optic lines have a far greater bandwidth than conventional electrical data transmission lines.

It is known to provide fiber optic line couplers which include a switching capability, making it possible to switch light energy from an input or upstream fiber optic bundle to a selected output or downstream bundle. One such switching structure is shown in the Green U.S. Patent 3,124,271 in which the structure includes slotted blocks, with the slots receiving and supporting individual fiber optic bundles in contiguous relationship. By providing relative movement between the slotted blocks to at least two positions, it becomes possible to transmit light energy between selected fiber optic bundles.

Also of interest in regard to switches for controlling light transmission between fiber optic bundles are the Zeitz U.S. Patent 4,082,435 and the Lewis U.S. Patents 4,088,787 and 4,057,719.

As previously explained, fiber optic bundles are inappropriate for long distance data transmission. The switching devices disclosed in the above identified prior art patents are intended for fiber optic bundles and are unsuitable for intercoupling single fiber optic links. In the context of single fibers, because of the extremely low level of power transmitted thereby switching losses must be minimized.

In current practice, it is now conventional to link together in series a chain of stations by fiber optic cables. This optical data carried by a cable to the first station in the chain is picked up by a photo detector and converted into electrical signals for data processing by computers or other electronic devices. The electrical output of the first station modulates a light-emitting diode, a laser beam generator or other light source to produce optical data which is carried by a fiber optic cable to the next station, and so on. In modern data communication parlance, the stations in a chain of this type are often referred to as "nodes".

Should a fault arise at any one station in the series chain, this arrests the flow of optical data and effectively shuts down the entire chain. In order to bridge this gap, one may substitute for the inoperative station an electronic repeater so that the incoming data may be transferred to the next station to restore the flow of data. However, the substitution of an electronic repeater for a defective node in the communication network involves a relatively complicated and costly operation.

The simplest way of cutting out a defective station in a series chain is by way of an optical by-pass switch acting to transfer the optical data from the incoming or upstream fiber optic cable to the downstream fiber optic cable coupling the output of this station to the next station down the line.

But fiber optic switches heretofore available for this purpose have a relatively high insertion loss and are subject to high levels of cross talk. Thus one known form of fiber optic switch makes use of an optical lens whose material is such that when it is subjected to a magnetic field, it acts to optically shift optical data applied thereto by an incoming fiber optic cable from one output cable to another coupled to the lens.

In view of the foregoing the main object of this invention is to provide switching devices for single fiber optic lines to block the flow of light energy through the line or to selectively switch flow from an upstream line to one or more downstream lines without introducing a significant attenuation loss.

More particularly, an object of this invention is to provide switching devices of the above type in which the attenuation loss is minimized by limiting the gap between the end ports of intercoupled single fiber optics links to a value not exceeding .010 inch (0.254mm), or by interposing optical means which focus on the port of the downstream fiber to prevent expansion and vignetting of the light cone within the device.

Another object of this invention is to provide an optical cross transfer switching unit of simple and inexpensive design which exhibits a low insertion loss and high cross talk isolation.

A significant advantage of a unit in accordance with the invention when used as a by-pass switch in conjunction with the links of a data processing chain is that when a fault is sensed in any node included in the chain, the optical data intended for the inoperative node may be immediately transferred to the next station to obviate shut down.

For a better understanding of the invention as well as other objects and further features thereof, reference is made to the following detailed description to be read in conjunction with the accompanying drawings, wherein:

Fig. 1 is a perspective view of a preferred form of single fiber optic cable usable with switching devices in accordance with the invention;

Fig. 2 is a side view, in section of one preferred embodiment in accordance with the invention constituted by an on-off switching device for single fiber optic cables, the cover of the housing cavity being removed;

Fig. 3 is a section taken in the plane of lines 3-3;

Fig. 3A is a sectional view of the prong included in a cable plug;

Fig. 4 shows, in perspective, a cable plug being inserted into a boss;

Fig. 5 is a sectional side view of a second preferred embodiment of an on-off switching device including a permanent magnet actuator in accordance with the invention;

Fig. 6 is a section taken in the plane of lines 6-6 in Fig. 5;

Fig. 7 is a sectional side view of a third embodiment of an on-off switching device;

Fig. 8 illustrates the electromagnetic actuator for the device shown in Fig. 7;

Fig. 9 is a side view of a fourth embodiment of an optical switch in accordance with the invention which functions to periodically chop light signals conveyed through fiber optic cables;

Fig. 10 is a section taken through the plane of lines 8-8 in Fig. 9;

Fig. 11 is a side view of a fifth embodiment showing a selector fiber optic light switch in accordance with the invention;

Fig. 12 is an end view of the fifth embodiment;

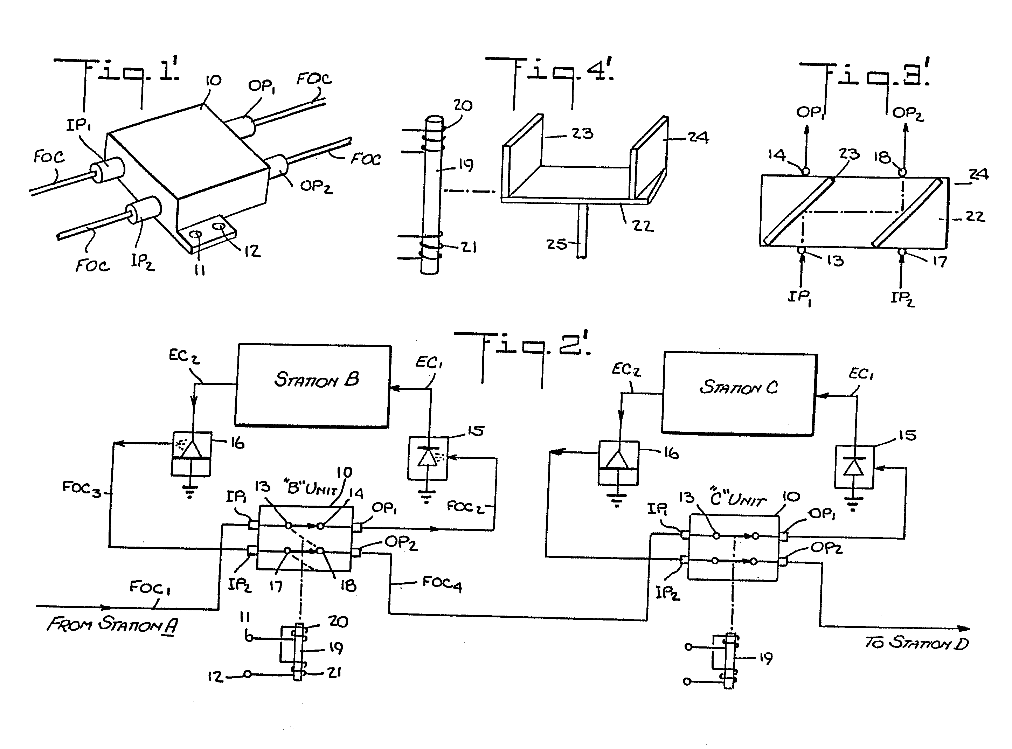

Fig. 1' is a perspective view of one embodiment of an optical transfer switching unit in accordance with the invention;

Fig. 2' schematically shows a serial chain of stations each provided with an optical switching unit to effect a by-pass action;

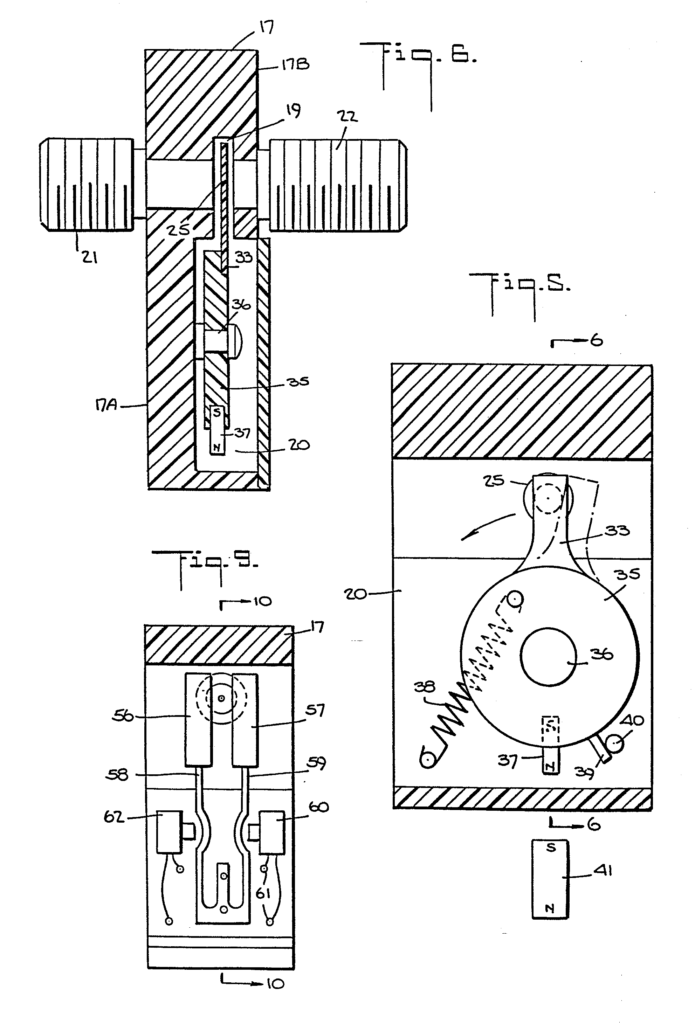

Fig. 3' illustrates in plan view the optical cross transfer element included in the unit;

Fig. 4' is a perspective view of the optical cross transfer element;

Fig. 5' illustrates a fiber optic cable input terminal and the corresponding output terminal;

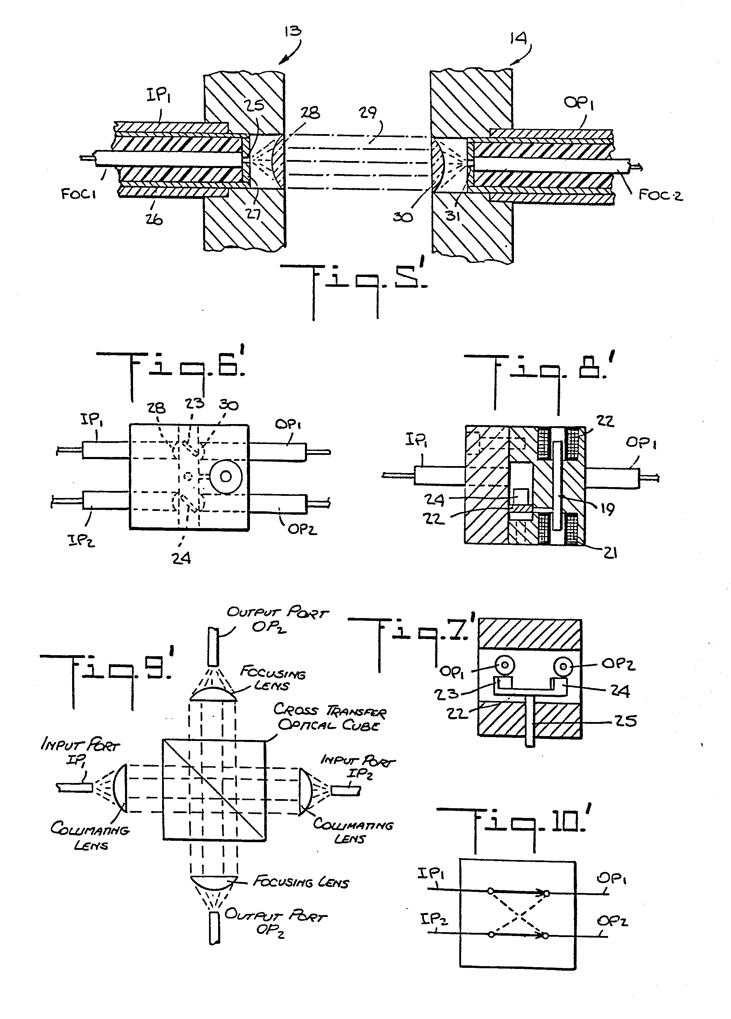

Fig. 6' is a longitudinal section taken through the unit;

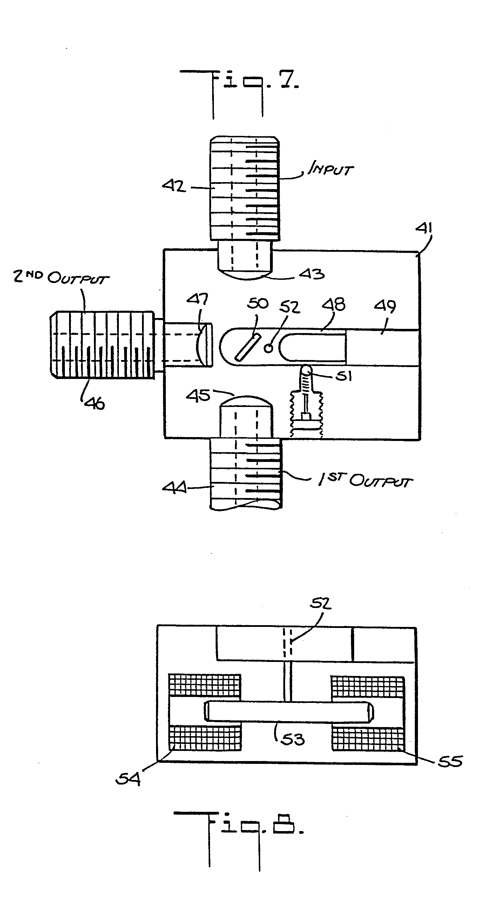

Fig. 7' is a transverse section taken in the plane indicated by line 7'-7' in Fig. 6';

Fig. 8' is an end view of the unit;

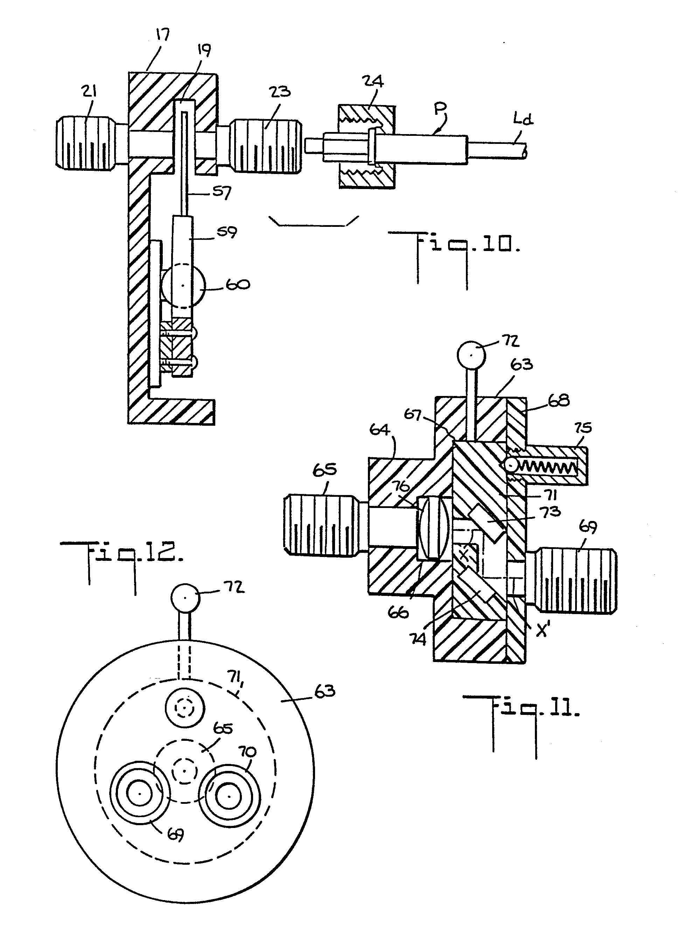

Fig. 9' illustrates a second embodiment of an optical transfer switching unit in accordance with the invention; and

Fig. 10' is a schematic diagram of the second embodiment.

The Fiber Optic Cable:

Referring now to Fig. 1, there is shown a preferred form of cladded single fiber optic cable for use in transmitting data through switching devices in accordance with the invention. This cable, generally designated by numeral 10, is of step index fiber optic construction.

In a conventionally clad single fiber optic cable, the refractive index of the light transmitting core is represented by $N_1$ and that of the cladding by $N_2$. Because there is a sharp boundary between core and cladding, this structure is called a step index fiber. The reflection at the boundary is not a zero distance phenomenon; for in being reflected, the ray actually penetrates a small distance into the cladding and there is some loss. This is seen as a faint glow along the length of the clad fiber.

In order to reduce such reflection loss, the rays are made to turn less sharply by reducing the index of refraction gradually rather than sharply in going from the core to the cladding. A fiber optic cable that achieves the effect is called a graded index fiber. A graded index fiber not only has a very low transmission loss but is used in applications requiring transmission over many kilometers at modulation bandwidths exceeding 50 mHz.

The step index fiber optic cable is provided with a fused silica core 11 on which there is a very thin silica cladding 12. A silicone coating 13 on cladding 12 protects the cladding from scuffing. A buffer jacket 14 ensheathes coating 13 over which there are tensile strength members 15 which allow the line to be pulled through long conduits. The cable is protected against damage by an outer jacket 16 of polyurethane.

While the fiber optic cable described herein represents a preferred form thereof, the invention is applicable to other commercially available forms.

First Embodiment:

Referring now to Figs. 1, 2, 3, 3A and 4 illustrated therein, is an ON-OFF optical switching device interposed between an upstream single fiber optic cable Lu and a downstream single fiber optic cable Ld, the cables preferably being of the type shown in Fig. 1. The device acts selectively to transfer a light signal from the upstream to the downstream cable (ON) or to block the passage thereof (OFF).

The device includes a housing 17 which may be formed of synthetic plastic or other structurally stable material, the housing being in the shape of a rectangular slab having a front face 17A and a rear face 17B. The housing is provided with an internal cavity defined by a narrow slit 19 leading into a rectangular well 20, the well being covered by a removable plate 17C. Drilled into front face 17A is a long bore 18A and drilled into rear face 17B is a short bore 18B. The two bores are in axial alignment and lead into opposite sides of slot 19.

Fitted into long bore 18A is the tubular shank 21S of an externally-threaded input boss 21 projecting from the panel face of the housing. Fitted into short bore 18B is the tubular shank 22A of an externally-threaded output boss 22 projecting from the rear face. Thus the length of the shanks correspond to that of the bores. The configuration shown is compatible with fiber connectors commercially made by "Amphenol". Obviously, other configurations can be used to render the device compatible with other conventionally used fiber connectors.

Cables Lu and Ld terminate in plugs P. Each plug, as best seen in Fig. 3A, includes a hollow prong 23 whose end or tip 23T is provided with a central port P which accommodates and exposes the bared end of core 11 of the fiber optics cable. The annular space between the cable and cylindrical wall of the prong is filled with a suitable potting compound to seal the cable coaxially within the prong.

Concentric with prong 23 is an internally-threaded cap nut 24 having a hexagonal outer shape to facilitate turning thereof. When plug P for upstream cable Lu is plugged into input boss 21, its prong 23 is then projected into shank 21A and cap nut 24 is turned in to threadably engage the boss to lock the plug in place.

The cable plugs are standardized, hence the plugs all have prongs of the same length. In order, therefore, for tip 23T of prong 23 for the Lu cable plug to lie flush with the front side of slit 19, the length of input boss 21 must be such that when the cap nut of the plug is fully turned in to abut the end of the boss, the prong tip is then flush with the front side wall of the slit. And because shank 21A of the input boss 21 is short, this boss is relatively long, whereas because shank 22S of the output boss is long, its boss must be relatively shorter in order for the prong of the Ld cable plug to lie flush with the rear side wall of the slit.

Disposed within slit 19 is a thin shutter blade 25 mounted on the upper end of a lever 26 disposed within well 20. The lower end of the lever is pivoted on a pin 27 and is provided with a lateral foot 28. Seated on foot 28 is a ferro-magnetic rod 29 which is more or less disposed within a solenoid 30 whose leads are connected to terminals 31 on the exterior of the housing.

Lever 26 is biased by a flat spring S to cause foot 28 to press against a stop 32, at which position lever 26 is vertical and holds shutter 25 in a position aligned with the optical axis X to block the passage of light between the upstream and downstream cables, in which state rod 29 is retracted relative to the solenoid.

When a voltage is applied to terminals 31 to energize solenoid 30, the resultant magnetic field attracts rod 29 to swing lever 26 to one side and shift shutter 25 away from optical axis X, thereby permitting the transfer of light signals from the upstream to the downstream fiber optic cable. When the voltage is cut off and the solenoid de-energized, spring S returns the rod to its retracted position to cause the shutter blade to again block passage of the light signal. Thus the device operates on an ON-OFF optical switch in the light signal line.

Second Embodiment:

The ON-OFF optical switching device shown in Figs. 5 and 6 is identical to that shown in Fig. 3 with respect to housing 17 and the input and output bosses 21 and 22 on the front and rear faces thereof. The shanks of these bosses are fitted into aligned holes on opposite sides of slit 19 in which shutter blade 25 is disposed to selectively block the passage of light signals from an upstream cable plugged into the input boss and a downstream cable plugged into the output boss.

In this instance however, shutter blade 25 is supported on an arm 33 extending from one side of a disc 35 mounted for rotation within well 20 on an axle 36. Secured to the opposite side of disc 35 and extending beyond its periphery is a permanent magnet bar 37. Disc 35 is spring-biased by a helical spring 38 which acts to turn the disc in the counterclockwise direction until a tab 39 thereon is arrested by a stop 40, at which point the angular position of the disc is such that shutter blade 25 is at zero degrees to block the passage of light signals.

When, however, an external permanent magnet bar 41 or a ferromagnetic element in the proximity of internal bar magnet 37 is shifted to the left, this causes disc 35 to swing clockwise to displace shutter blade 25 and permit light signals to pass across the air gap formed by the slit. In all other respects, the operation of this magnetically-actuated ON-OFF switch is the same as that in Fig. 3.

Third Embodiment:

In the switching structure shown in Figs. 7 and 8, the device functions optically in a manner comparable to a single-pole, double-throw switch to direct light from an input port to either one of two output ports.

To this end, the housing block is provided on one face with an input boss 42 which communicates with a cavity having a positive lens 43 therein so that light projected from the light entry port of the input fiber optical cable coupled to input boss 42 is normally directed towards a first output on the opposing face of the housing. This first output has an output boss 44 which communicates with a cavity having a positive lens 45 therein. Mounted on one end face of housing 41 is a second output constituted by a boss 46 which leads to a cavity containing a positive lens 47, the optical axis of this output being normal to that of the first output.

A mirror-carrier or slider 48 is disposed in a slot 49 in the housing, the slider axis being aligned with the optical axis of the second output. A mirror 50 is supported on the inclined (45°) end of the slider, so that when the slider is in its forward position, as shown in Fig. 7, the mirror 50 then intercepts and deflects light emitted from the input port toward the second output. When slider 48 is retracted, the light from the input is then directed to the first output.

A spring-loaded ball detent 51 is arranged at one side of the slider to make certain that mirror 50 latches in the desired position. The three positive lenses within the structure ensure proper focusing of light into the fiber cores.

To effect movement of the slider, the slider is linked to a pin 52 which extends laterally from the midpoint of an iron core 53 whose opposing ends extend into opposing solenoids 54 and 55. Initially, the core is symmetrically disposed with respect to the solenoids. When solenoid 54 is energized, the associated core end is drawn therein to shift slider 58 into its operative forward position. When solenoid 55 is energized, the associated core end is drawn therein to retract the slider. Alternatively, the slider may be linked by a rod extending axially therein into a single solenoid which when energized by a voltage in one polarity pulls the slider into its retracted position, and when the voltage is reversed in polarity causes the slider to assume its forward position.

Fourth Embodiment:

In the optical switching device shown in Figs. 9 and 10, we again have housing 17 and input and output bosses 21 and 23, as in Fig. 3. However, in this instance instead of a single shutter blade we have a pair of shutter vanes 56 and 57 mounted on the tines 58 and 59 of a tuning fork. The tuning fork is excited at its natural resonance frequency by a drive coil 60 having terminals 61 to which a drive voltage is applied.

The two vanes oscillate toward and away from each other, the vanes being in parallel planes so that they do not collide but overlap when they swing inwardly to block the passage of the light signal, the light passage being restored when the vanes swing away from each other. This arrangement functions as a periodic light chopper for optical fiber circuits, the ON-OFF duty cycle being controllable by the relative position of the vanes in the tuning fork tines. The second coil 62 associated with the tuning fork serves as a pick-up coil in which a voltage is induced whose frequency is that of the tuning fork to provide an output signal that is useful for control purposes.

Fifth Embodiment:

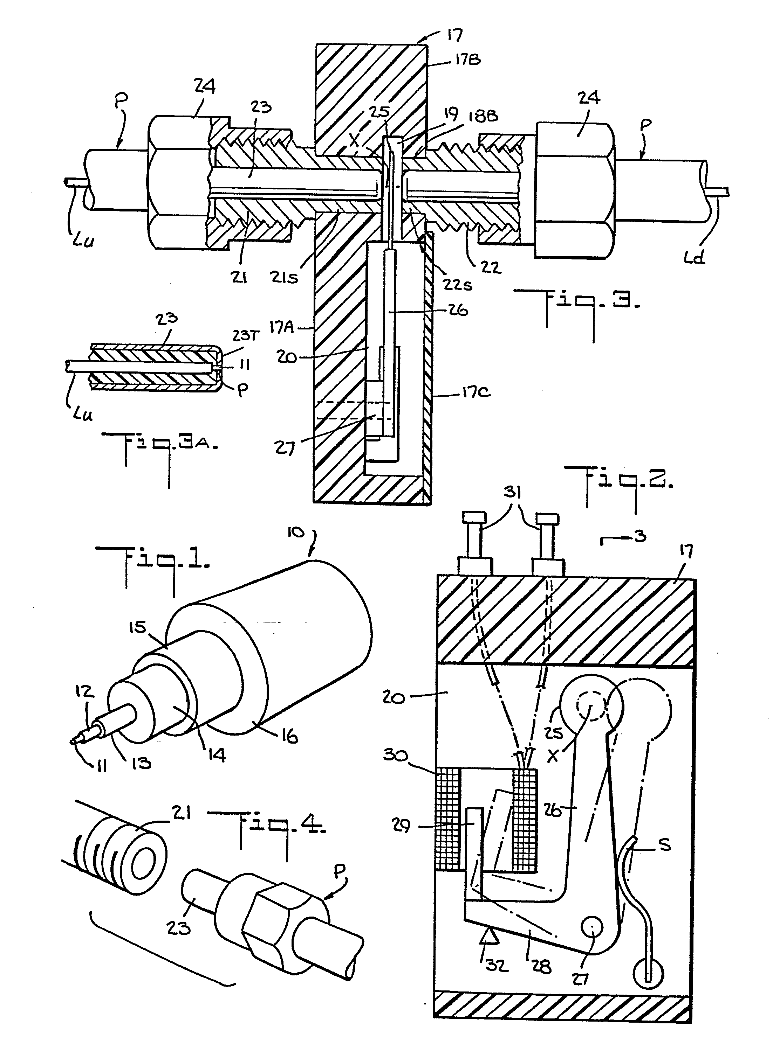

In the switching structure shown in Figs. 11 and 12 which functions as an optical selector switch, a circular housing 63 is provided with a cylindrical front wall protuberance 64 having a central bore therein to receive the shank of an input boss 65, the bore having a section 66 of enlarged diameter leading into a circular well 67 closed by a cover plate 68 on which are mounted a pair of output bosses 69 and 70. Nested within well 67 is a disc-shaped carrier 71 which is rotatable by means of a hand-operated lever 72 extending from housing 63 and shiftable within a peripheral slot in the housing. Supported within carrier 71 is a front face mirror 73 positioned to receive an incoming light signal along a central optical axis X in line with the upstream fiber optic cable plugged into input boss 65.

Mirror 73 reflects the light signal impinging thereon to a second front face mirror 74 which is supported in the carrier at a position parallel to mirror 73, mirror 74 directing the light signal along an offset optical axis X' to whichever output boss 69 or 70 is in alignment with this axis.

The output bosses 69 and 70 into which downstream cables are plugged are positioned on a circle whose radius is equal to the distance between axes X and X', so that by rotating carrier 71 about axis X, one may position optical axis X' to register with either output boss. A detent 75 is provided to assure alignment with either output boss. The detent is shown in the form of a spring-biased ball on the cover plate 68, the ball being socketed in a recess in the mirror carrier. However, other forms of detents may be used to assure proper alignment at the two operative positions.

To reduce light losses in this switch, a positive lens 76 is disposed in cavity 66. The lens is placed at the light entry port for the upstream fiber optic cable plugged into input boss 65, the lens acting to focus the light precisely onto the port of the downstream fiber in line with axis X'. In practice, instead of a pair of mirrors supported in carrier 71, use may be made of optical equivalents thereof, such as a rhomboid or two right angle prisms.

Optical Transfer Switch

Referring now to Fig. 1', there is shown an actual embodiment of an optical transfer switching unit 10 in accordance with the invention which is adapted to function as a by-pass switch. The unit is provided with first and second input ports $IP_1$ and $IP_2$ for receiving fiber optic cables FOC. The unit has two operative states or modes: a direct transfer state which is brought about by applying a voltage to terminal 11 relative to ground, and a cross transfer state which is effected when a voltage is applied to terminal 12.

In practice, fiber optic cables FOC may be in the form of cladded, single fiber optic cables of step index construction.

To schematically illustrate the operation of a unit, Fig. 2' shows a chain of stations A, B, C, D, etc. in a serial arrangement. Each station receives optical data from a preceding station, the data being converted into corresponding electrical signals for processing by computers or other electronic devices at the station whose electrical signal output is then converted into an optical data signal which is transmitted to the next station.

In Fig. 2', only stations B and C are represented by blocks, each operating in conjunction with an optical switching unit (units B and C) performing a by-pass function. Station B receives an optical data signal from the output of station A which is applied through input port $IP_1$ by a fiber optic cable $FOC_1$ to the first input terminal 13 of unit 10. Unit 10 includes a corresponding first output terminal 14 which is connected by fiber optic cable $FOC_2$ to a photodetector 15 which converts the optical data into a corresponding electrical signal. This signal is carried by an electric cable $EC_1$ to the input of station B whose electrical signal output is conveyed by electric cable $EC_2$ to a light source 16, such as a light-emitting diode, thereby converting the output signal into optical data which is carried by fiber optic cable $FOC_3$ through the second input port $IP_2$ to the second input terminal 17 of the switching unit.

Unit 10 is provided with a corresponding second output terminal 18 which is connected by fiber optic cable $FOC_4$ through input port $IP_1$ of optical switching unit C to its input terminal 13, station C having the same optical and electrical connections as station B, the second output terminal 18 of the switching unit C going to station D. Thus each station in the chain is provided with its own by-pass switch.

The optical switching units are provided with an optical cross transfer element (not shown in Fig. 2') operatively coupled to a ferromagnetic armature 19 whose axial position is shiftable within limits determined by a solenoid 20 connected to terminal 11 and a solenoid 21 connected to terminal 12.

When a dc voltage (i.e., 15 or 24 V.) is applied to terminal 11 to energize solenoid 20, the optical element is retracted to cause the unit to operate in the direct transfer mode in which the optical signals from input terminals 13 and 14 are transferred to their corresponding output terminals 14 and 18. In the direct transfer state, incoming optical data signal arriving from station A is fed through the first terminals 13 and 14 of unit B to photodetector 15 which converts the optical signal to a corresponding electrical signal. This signal is processed in station B whose electricl output is converted into an optical signal that is transferred through the second terminals 14 and 18 to station C where a similar action takes place.

Should station B become inoperative for any reason, this would interrupt the flow of optical data from station to station in the chain. In order to bridge this gap in the flow of data, a dc voltage is then applied to terminal 12 to energize solenoid 21 to cause the core to shift the optical element to its operative position to bring about a cross transfer of optical data from the first input terminal 13 to second output terminal 18, the transmission of optical data from the second input terminal 17 being blocked.

In this cross transfer state, optical data from station A is transmitted through terminals 13 and 18 to station C, thereby bypassing inoperative station B and maintaining the chain in operation.

In the event it is station C or any other station in the chain that is rendered inoperative, then the associated optical switching unit is switched from the direct transfer state to the cross transfer state to bypass the inoperative station.

In the arrangement shown, the unit is of the latching type; that is, the switching element thereof is either latched by a respective solenoid to function in the direct transfer state or in the cross transfer state. Alternatively, the switch may be made to operate in a fail safe format by spring-biasing the armature and making use of a single solenoid which when energized causes the unit to shift to the cross transfer state, the spring automatically returning the unit to its normal direct transfer mode should the solenoid fail to operate for any reason.

The Structure of the Unit:

Figs. 3' and 4' illustrate the structure of the optical cross transfer element included in unit 10. This element is constituted by a rectangular carriage 22 which supports a pair of mirrors 23 and 24. Carriage 22 is mechanically linked to armature 19 and is provided with a guide pin 25 so that when the armature is axially displaced, the pin travels in a parallel channel to maintain the carriage in a plane normal to the axis of the armature.

Mirrors 23 and 24 lie at 45 degree angles and are parallel to each other. In the cross transfer state, carriage 22 is positioned so that mirror 23 intercepts light emitted from the end of the fiber optical cable held in the first input port $IP_1$, the light rays being deflected toward mirror 24 which in turn directs the light toward the end of the fiber optic cable held in the second output port $OP_2$, thereby effecting cross transfer.

When the optical element is retracted, the mirrors no longer lie between the input and output terminals; hence light is directly transferred from the input terminals to the corresponding output terminals.

Because the light from the fiber optic cables must traverse a relatively large air gap in the unit, in order to minimize attenuation use is made of the terminal arrangement shown in Fig. 5', (input port $IP_1$ and output port $OP_1$). The first input terminal 13 is adapted to receive a plug 26 within which is coaxially embedded fiber optic cable $FOC_1$, the end 25 of the core of the cable being exposed and centered within the end of the plug by a jewel bearing 27 to ensure concentricity.

Placed in front of the plug in input terminal 13 is a positive lens 28 which gathers the cone of light emitted from the end of core 25 and projects the light signal forwardly in parallel rays. Thus lens 28, which is placed between its first and second focal planes, acts to collimate the light emitted by the input fiber optic cable to produce a collimated light beam 29. This is intercepted at the output terminal 14 by a focusing lens 30 which is positioned in front of the fiber optic cable $FOC_2$ plugged into the first output port $OP_1$ in an arrangement which is essentially the same as in the input terminal.

Lens 30 acts to collect the light picked up from collimated beam 29 and focus it onto the exposed end of core 31 of cable $FOC_2$. Assuming, therefore, proper optical axial alignment of the fiber optic cables $FOC_1$ and $FOC_2$ and of the related lenses, substantially all of the light yielded by the upstream fiber optic cable is transferred to the downstream cable with minimum attenuation.

Fig. 6' shows the actual arrangement of the components in the unit. It will be seen that the cross transfer optical element formed by carriage mirrors 23 and 24 is interposed between the input and output terminals and that the unit is therefore in the cross transfer state. Hence light from input port $IP_1$ is cross transferred to output port $OP_2$, while light from input port $IP_2$ is blocked.

Fig. 7' shows the optical cross transfer element retracted to fully expose the output ports, so that there is then direct transfer of light from input port $IP_1$ to output port $OP_1$, and from input port $IP_2$ to output port $OP_2$. Fig. 8' illustrates the arrangement in the direct transfer state when solenoid 21 is energized to retract the cross transfer optical element.

Second Embodiment:

In the optical switching unit shown schematically in Figs. 9' and 10', the fiber optic cables inserted in the input and output ports of the terminals are arranged symmetrically with respect to the faces of an optical cube acting as a cross transfer element. This cube is constituted by a pair of prisms 31 and 32 which are bonded together at their inclined ($45^{o}$) faces to define an inclined interface 33, both surfaces of which are reflective.

In practice, the inclined interface may be silvered, as by vacuum deposition of aluminum or other means to provide a specular reflecting plane. Or the prisms may have different refractive indexes to produce reflection at the interface thereof, thereby effectively creating a pellicle. A pellicle is ordinarily a thin, plastic membrane stretched over a frame, which, by virtue of its extreme thinness, reduces astigmatism and ghost displacement to acceptable values. The arrangement disclosed herein produces a similarly thin film, but without the need for relatively costly expedients normally used to maintain a structurally stable pellicle.

Input and output ports $IP_1$ and $OP_1$ are positioned along an X-axis which extends through the center of the optical cube on opposite sides of one pair of faces, whereas input and output ports $IP_2$ and $OP_2$ are positioned along a Y axis which is perpendicular to the X axis, these ports being positioned on opposite sides of the other pair of cube faces.

Hence when the cube is in place, light from input port $IP_1$ is reflected by one surface of inclined interface 33 toward output port $OP_1$, and light from input port $IP_2$ is reflected by the opposite surface of the interface toward output port $OP_2$, thereby effecting a double cross transfer, as illustrated in Fig. 10. When the optical cube is retracted, there is direct transfer between the corresponding input and output ports.

In this arrangement, as in the first embodiment, collimating lenses are associated with the input terminals to produce collimated beams which are intercepted at the output terminals by lenses which collect the light and focus the rays onto the fiber optic cable core ends to minimize attenuation.

CLAIMS:

1. A switching device for optically transferring a light signal carried by a single fiber optic upstream cable having a cladded core to at least one downstream cable, said device comprising:

A. a housing provided with flat faces and a cavity therebetween, the faces having bores therein communicating with said cavity;

B. externally-threaded bosses on the faces of the housing, each boss having a tubular shank fitted into a respective bore;

C. a plug terminating each cable, said plug being provided with a hollow prong receiving the cable, the core end of the cable being fitted into a port at the tip of the prong, and a rotatable nut cap concentric with the prong adapted to threadably engage the boss when the prong is projected into the shank, the plug for the upstream cable being plugged into the boss on one face, and the plug for the downstream cable being plugged into the boss on another face of the housing; and

D. means in said cavity to effect a transfer of light from the port of the upstream plug into the port of the downstream plug.

2. A switching device as set forth in claim 1, wherein said cavity includes a slit having parallel walls to define a gap, said housing having front face and rear face bores which lie on an axis normal to said walls whereby the ports of the upstream and downstream cable plugs received on the bosses are in alignment and the light signal from the upstream cable traverses said gap to be picked up by the downstream cable, and a retractable shutter blade in said slit which in a first position blocks said light signal and in a second position passes said light signal.

3. A device as set forth in claim 2, wherein said blade is mounted on the upper end of a lever whose lower end is pivoted, and electromagnet means operatively coupled to said lever which when energized swings said lever from said first to said second position.

4. A device as set forth in claim 1, wherein said cavity includes a slit having parallel walls to define a gap, said housing having front and rear face bores which lie on an axis normal to said walls whereby the ports of the cables plugged into the bosses received in said bores are in alignment and the light signal from the upstream cable traverses the gap to be picked up by the downstream cable, and a pair of vanes in said gap mounted on the tines of a tuning fork driven to oscillate at its natural resonance frequency, whereby the reciprocating vanes then chop the light signal at the same frequency.

5. A device as set forth in claim 1, wherein said housing is provided with an input boss on one face, a first output boss on an opposing face in axial alignment with the input boss, and a second output boss on another face at an angle to said one face, an input fiber optic cable being plugged into the input boss and first and second output fiber optic cables being plugged into the respective output bosses, and a slider having a mirror thereon movable in said cavity from a forward position in which the mirror deflects light from the input cable to said second output cable, and in a retracted position permits light from the input cable to be received by the first output cable.

6. An optical switching unit adapted to operate in conjunction with first and second fiber optic input cables whose cores convey light signals which are emitted from the ends thereof, and first and second fiber optic output cables whose cores transmit light signals picked up by the ends thereof, said unit comprising:

A first and second optical input terminals having ports to receive the first and second input cables and expose the core ends thereof;

B first and second optical output terminals having ports to receive the first and second output cables and expose the core ends thereof, said input and output terminals being separated by a gap and being so arranged that the first input cable is optically aligned with the first output cable, and the second input cable is optically aligned with the second output cable; and

C an optical cross transfer element which is shiftable from a cross transfer position in which the element lies in the gap and is interposed between the input and output terminals, to a direct transfer position in which the element is retracted with respect to the gap, the element having reflecting means which in the cross transfer position intercepts the light from the first and second input terminals and directs light emitted from the first input terminal toward the second output terminal, the light from the first and second input terminals being unintercepted and being directly transferred to the first and second output terminals in the direct transfer position.

7. A unit as set forth in claim 6 wherein each input terminal includes a collimating lens to collect the light from the core end of the associated fiber optic input cable and produce a collimated beam, and wherein each output terminal includes a focusing lens to collect light from the beam and to focus it on the core end of the associated fiber optic output cable.

8. In combination with each data-processing station in a series chain thereof, each station having a light signal-to-electrical signal converter at its input and an electrical signal-to-light signal transducer at its output, a bypass switch associated with each station and constituted by an optical switching unit as set forth in claim 6 an incoming light signal for the station being applied to the first input terminal of the unit, the light signal at the output of the transducer being applied to the second input terminal thereof, the light output from the first output terminal being applied to the converter, and the light output from the second output terminal being fed to the next station in the chain, whereby the incoming light signal may be caused to bypass the station and be conveyed to the next station by operating the unit in its cross transfer position.

9. A unit as set forth in claim 8 wherein said optical element is constituted by an optical cube formed by a pair of joined prisms whose inclined interface is reflective on both sides thereof, whereby in the cross transfer position, light from the first input terminal is reflected by one side toward the second output terminal, and light from the second input terminal is reflected by the opposite side toward the first output terminal.

Fig. 1.
Fig. 4.
Fig. 3.
Fig. 2.
STATION B
STATION C
"B" UNIT
"C" UNIT
FROM STATION A
TO STATION D
FOC
FOC1
FOC2
FOC3
FOC4
EC1
EC2
OP1
OP2
IP1
IP2

Fig. 6.
17
17B
19
22
25
21
33
36
35
17A
S
N
37
20
Fig. 5.
6
25
33
35
20
36
38
40
37
39
S
N
6
S
41
N
Fig. 9.
10
17
56
57
58
59
62
60
61
10

0115126

13
14
IP1
25
28
29
OP1
FOC1
26
27
30
31
FOC2
Fig.5'
Fig.6'
28
23
30
IP1
OP1
IP2
OP2
24
Fig.8'
22
IP1
OP1
24
22
19
21
Output Port
OP2
Fig.7'
OP1
OP2
23
24
22
25
Fig.9'
Focusing Lens
Cross Transfer Optical Cube
Input Port
IP1
Input Port
IP2
Collimating Lens
Collimating Lens
Focusing Lens
Output Port
OP2
Fig.10'
IP1
OP1
IP2
OP2

Fig. 7.

INPUT
42
41
43
2ND OUTPUT
47
50
52
48
49
51
46
45
1ST OUTPUT
44

52
53
54
55


Fig. 8.

0115126

17
19
21
23
24
P
Ld
57
59
60
Fig.10.
72
63
68
67
64
75
65
76
71
73
69
66
74
X'
Fig.11.
Fig.12.
72
71
63
65
70
69

0115126

17
17B
24
P
23
25
19
18B
X
24
P
Lu
21
21S
22S
22
Ld
Fig. 3.
23
23T
17A
26
20
11
P
Lu
17C
27
Fig. 3A.
Fig. 2.
31
3
17
10
Fig. 1.
15
20
12
25
X
30
11
13
14
16
26
29
21
Fig. 4.
S
P
23
32
28
27

European Patent Office

# EUROPEAN SEARCH REPORT

0115126

Application number

EP 83 30 7190

| DOCUMENTS CONSIDERED TO BE RELEVANT | | | |
|---|---|---|---|
| Category | Citation of document with indication, where appropriate, of relevant passages | Relevant to claim | CLASSIFICATION OF THE APPLICATION (Int. Cl. 3) |
| X | DE-A-2 820 433 (CUTLER-HAMMER WORLD TRADE INC.) * Page 22 middle, figure 7 * | 1,2 | G 02 B 7/26 |
| A | US-A-3 970 371 (Y. KAIWA et al.) * Column 3, lines 48-63; figures * | 3,4 | |
| A | GB-A-2 083 648 (KOKUSAI DENSHIN DENWA CO., LTD.) * Figures 10B,11B, claims 1,9 * | 5,6 | |
| A | APPLIED OPTICS, vol. 19, no. 15, 1. August 1980, M. NUNOSHITA et al. "Optical bypass switch for fiber-optic data bus systems", pages 2574-2577 | 6-8 | TECHNICAL FIELDS SEARCHED (Int. Cl. 3) |
| A | EP-A-0 012 274 (NIPPON ELECTRIC CO. LTD.) * Page 12, figure 2 * | 6-8 | G 02 B 7/26 |

The present search report has been drawn up for all claims

| Place of search | Date of completion of the search | Examiner |
|---|---|---|
| BERLIN | 29-02-1984 | FUCHS R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82